# DEMANDE DE BREVET EUROPEEN

(11) **EP 3 979 661 A1**
(43) Date de publication de la demande: **06.04.2022**
(21) Numéro de dépôt: 21198389.5
(22) Date de dépôt: 22.09.2021
(51) Int. Cl.: H04N 21/81, H04N 21/436

(54) **PROCEDE DE RESTITUTION SONORE**

(30) Priorité: 30.09.2020 FR 2009961
(71) Demandeur: SAGEMCOM BROADBAND SAS, 92500 Rueil-Malmaison (FR)
(72) Inventeur: BOUVIGNE, Gabriel, 92500 RUEIL MALMAISON (FR); MEVISSEN, Olivier, 92500 RUEIL MALMAISON (FR)
(74) Mandataire: Lavaud, Thomas

(57) **Abrégé**

Procédé de restitution sonore, mis en œuvre dans un système comprenant un décodeur audio/vidéo (3) et des équipements de diffusion audio (4) préalablement regroupés dans un même groupe audio (7), comprenant les étapes de :
- définir un premier sous-groupe (8a) comprenant le décodeur audio/vidéo (3) et au moins un premier équipement de diffusion audio (4a), et un deuxième sous-groupe (8b) comprenant au moins un deuxième équipement de diffusion audio (4b) ;
- déterminer dynamiquement un mode courant dans lequel se trouve le système ;
- lorsque le système se trouve dans le premier mode, faire restituer par le premier sous-groupe (8a) un premier signal audio comprenant un contenu audio commun, et par le deuxième sous-groupe (8b) un deuxième signal audio comprenant le contenu audio commun ;
- lorsque le système se trouve dans le deuxième mode, faire restituer par le premier sous-groupe (8a) un troisième signal audio comprenant un flux audio appartenant au flux audio-vidéo, et par le deuxième sous-groupe un quatrième signal audio.

## Description

L'invention concerne le domaine des systèmes comprenant un décodeur audio/vidéo et une pluralité d'enceintes connectées et, en particulier, des systèmes qui mettent en œuvre le *multiroom* audio.

### ARRIERE PLAN DE L'INVENTION

Certaines enceintes connectées récentes peuvent être associées et configurées pour former un système audio offrant de nouvelles fonctionnalités. Parmi ces fonctionnalités, on trouve par exemple la fonction de *multiroom* (que l'on traduit parfois par « multi-pièces »), qui permet de définir différents groupes audio (ou zones) comportant chacun une ou plusieurs enceintes connectées, et de synchroniser la restitution sonore entre ces différents groupes audio.

On peut trouver, au sein d'un tel système, une ou des enceintes qui sont plus particulièrement destinées à restituer le son normalement destiné à la télévision, afin d'améliorer la qualité du rendu sonore. Une telle enceinte est par exemple de type « barre de son », c'est-à-dire une enceinte multi-voies, de forme allongée et de faible hauteur, destinée à être placée devant la télévision.

La barre de son est le plus souvent reliée par un lien HDMI à la télévision ou au décodeur audionumérique (qui est souvent intégré dans un boîtier décodeur, ou *set-top box*, en anglais).

Les utilisateurs d'un tel système audio se plaignent fréquemment du problème qui suit.

La barre de son reliée à la télévision peut se trouver soit dans une configuration de « rendu musical », dans laquelle elle restitue un contenu musical (par exemple un contenu diffusé en *streaming* depuis un *smartphone* ou une tablette), soit dans une configuration de « rendu TV », dans laquelle elle restitue un flux audio associé à un flux vidéo qui est quant à lui restitué par la télévision.

Lorsque la barre de son se trouve dans la configuration de rendu musical et qu'un signal est détecté sur l'entrée HDMI de la barre de son, celle-ci doit passer de la configuration de rendu musical à la configuration de rendu TV.

Deux solutions existent dans l'art antérieur pour gérer cette transition entre les configurations.

Une première solution consiste à définir un niveau de priorité entre les entrées audio de la barre de son, l'entrée HDMI étant alors potentiellement prioritaire.

L'inconvénient de cette première solution est que, au moment de la transition, le son de la télévision remplace le contenu musical non seulement dans la pièce où sont situées la télévision et la barre de son (par exemple le salon), mais aussi dans les autres pièces faisant partie du même groupe audio (par exemple la cuisine). Un utilisateur situé dans la cuisine ne peut donc plus profiter du contenu musical.

Une deuxième solution consiste à « détacher » automatiquement la barre de son du groupe audio lorsqu'un signal audio est détecté sur l'entrée HDMI.

L'inconvénient de cette deuxième solution est qu'une fois que la diffusion du flux audio-vidéo est terminée, la lecture musicale ne se fait plus sur la barre de son. L'utilisateur est donc contraint de réinclure manuellement la barre de son dans le groupe audio. De plus, ce « détachement » intervient dès qu'un signal audio est détecté sur l'entrée HDMI, y compris lorsque l'utilisateur ne visionne pas de flux audio-vidéo tel qu'un film, et par exemple lorsque l'utilisateur allume le décodeur audio/vidéo pour naviguer dans l'interface graphique pour programmer un enregistrement.

Aucune de ces approches n'est donc pleinement satisfaisante pour les utilisateurs.

### OBJET DE L'INVENTION

L'invention a pour objet de pallier les inconvénients des solutions qui viennent d'être décrites.

### RESUME DE L'INVENTION

En vue de la réalisation de ce but, on propose un procédé de restitution sonore, mis en œuvre dans un système comprenant un décodeur audio/vidéo relié à une télévision et une pluralité d'équipements de diffusion audio préalablement regroupés dans un même groupe audio, comprenant les étapes de :
- définir un premier sous-groupe comprenant le décodeur audio/vidéo et au moins un premier équipement de diffusion audio, et un deuxième sous-groupe comprenant au moins un deuxième équipement de diffusion audio ;
- déterminer dynamiquement, en fonction d'au moins un paramètre prédéfini comprenant un état de fonctionnement courant du décodeur audio/vidéo, un mode courant dans lequel se trouve le système, parmi une pluralité de modes prédéfinis comprenant un premier mode et un deuxième mode ;
- lorsque le système se trouve dans le premier mode, dans lequel le décodeur audio/vidéo ne diffuse pas de flux audio-vidéo, faire restituer par le premier sous-groupe un premier signal audio comprenant un contenu audio commun, et par le deuxième sous-groupe un deuxième signal audio comprenant le contenu audio commun ;
- lorsque le système se trouve dans le deuxième mode, dans lequel le décodeur audio/vidéo diffuse un flux audio-vidéo, faire restituer par le premier sous-groupe un troisième signal audio comprenant un flux audio appartenant au flux audio-vidéo, et par le deuxième sous-groupe un quatrième signal audio.

Dans le procédé de restitution sonore selon l'invention, un premier sous-groupe et un deuxième sous-groupe d'équipements de diffusion audio appartenant au groupe audio sont donc définis. Les signaux audio restitués par le premier sous-groupe et le deuxième sous-groupe sont potentiellement différents et dépendent de l'état de fonctionnement courant du décodeur audio/vidéo. Il est donc possible, sans modifier la constitution du groupe audio, de faire restituer un contenu musical par tout le groupe audio, puis de lancer la diffusion d'un flux audio-vidéo (un film par exemple) via la télévision et le premier sous-groupe sans interrompre la diffusion du contenu musical par le deuxième sous-groupe.

On propose de plus un procédé de restitution sonore tel que précédemment décrit, dans lequel le quatrième signal audio ne comprend pas le flux audio appartenant au flux audio-vidéo.

On propose de plus un procédé de restitution sonore tel que précédemment décrit, dans lequel le quatrième signal audio comprend le flux audio appartenant au flux audio-vidéo.

On propose de plus un procédé de restitution sonore tel que précédemment décrit, comprenant l'étape de déterminer que le système passe du premier mode au deuxième mode lorsque le décodeur audio/vidéo passe d'un état de fonctionnement dans lequel il ne diffuse pas de flux audio-vidéo, à un état de fonctionnement dans lequel il diffuse un flux audio-vidéo.

On propose de plus un procédé de restitution sonore tel que précédemment décrit, dans lequel, lorsque le système se trouve dans le premier mode (respectivement le deuxième mode) et qu'un utilisateur navigue dans une interface graphique du décodeur audio/vidéo visible sur la télévision, le premier signal audio (respectivement le troisième signal audio) comprend des sons associés à la navigation dans ladite interface graphique, et le deuxième signal audio (respectivement le quatrième signal audio) ne comprend pas les sons associés à la navigation dans ladite interface graphique.

On propose de plus un procédé de restitution sonore tel que précédemment décrit, dans lequel la pluralité de modes prédéfinis comprend aussi un premier sous-mode et un deuxième sous-mode appartenant au premier mode, le système passant du premier sous-mode au deuxième sous-mode lorsque le décodeur audio/vidéo passe d'un état actif dans lequel le décodeur audio/vidéo peut diffuser un contenu vidéo à un premier état de veille dans lequel le décodeur audio/vidéo ne peut pas diffuser de contenu vidéo, et du deuxième sous-mode au premier sous-mode lorsque le décodeur audio/vidéo passe du premier état de veille à l'état actif.

On propose de plus un procédé de restitution sonore tel que précédemment décrit, dans lequel le décodeur audio/vidéo comporte une enceinte interne qui se trouve dans un état allumé lorsque le décodeur audio/vidéo se trouve dans le premier état de veille, et dans lequel la pluralité de modes prédéfinis comprend aussi un troisième sous-mode appartenant au premier mode, le système passant du deuxième sous-mode au troisième sous-mode lorsque le décodeur audio/vidéo passe du premier état de veille à un état éteint ou à un deuxième état de veille dans lequel l'enceinte interne se trouve dans un état éteint, et du troisième sous-mode au deuxième sous-mode lorsque le décodeur audio/vidéo passe de l'état éteint ou du deuxième état de veille au premier état de veille.

On propose de plus un procédé de restitution sonore tel que précédemment décrit, comprenant l'étape d'empêcher le décodeur audio/vidéo de passer dans le deuxième état de veille lorsque le système se trouve dans le premier mode et que le contenu audio commun est en train d'être restitué.

On propose de plus un procédé de restitution sonore tel que précédemment décrit, dans lequel la pluralité de modes prédéfinis comprend aussi un troisième mode, le système passant du troisième sous-mode au troisième mode lorsque tous les deuxièmes équipements de diffusion audio passent dans un état éteint, et du troisième mode au premier mode lorsque le décodeur audio/vidéo passe dans un état allumé et/ou qu'au moins l'un des deuxièmes équipements de diffusion audio passe dans un état allumé.

On propose de plus un procédé de restitution sonore tel que précédemment décrit, comprenant l'étape d'interdire que le groupe audio contienne plus d'un décodeur audio/vidéo.

On propose de plus un système comprenant un décodeur audio/vidéo et une pluralité d'équipements de diffusion audio regroupés dans un même groupe audio, dans lequel est mis en œuvre le procédé de restitution sonore tel que précédemment décrit.

On propose de plus un programme d'ordinateur comprenant des instructions qui conduisent le système précédemment décrit à exécuter les étapes du procédé de restitution sonore tel que précédemment décrit.

On propose aussi un support d'enregistrement lisible par ordinateur, sur lequel est enregistré le programme d'ordinateur qui vient d'être décrit.

On propose de plus un équipement maître, appartenant à un système comprenant un décodeur audio/vidéo et une pluralité d'équipements de diffusion audio regroupés dans un même groupe audio, l'équipement maître étant agencé pour mettre en œuvre le procédé de restitution sonore tel que précédemment décrit.

On propose en outre un équipement maître tel que précédemment décrit, l'équipement maître étant un décodeur audio/vidéo.

On propose aussi un équipement maître tel que précédemment décrit, l'équipement maître étant une enceinte connectée.

On propose aussi un programme d'ordinateur comprenant des instructions qui conduisent l'équipement maître tel que précédemment décrit à exécuter les étapes du procédé de restitution sonore tel que précédemment décrit.

On propose aussi un support d'enregistrement lisible par ordinateur, sur lequel est enregistré le programme d'ordinateur qui vient d'être décrit.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
[Fig. 1] la figure 1 représente une première pièce et une deuxième pièce de l'habitation d'un utilisateur ;
[Fig. 2] la figure 2 représente le premier sous-groupe et le deuxième sous-groupe du groupe audio ;
[Fig. 3] la figure 3 est un tableau listant les différents états de fonctionnement du décodeur audio/vidéo et des équipements de diffusion audio selon les différents modes du système ;
[Fig. 4] la figure 4 représente les transitions entre les différents modes du système ;
[Fig. 5] la figure 5 est un organigramme représentant un premier agencement fonctionnel du système, qui se trouve dans le troisième sous-mode du premier mode ;
[Fig. 6] la figure 6 est un organigramme représentant un deuxième agencement fonctionnel du système, qui se trouve dans le deuxième sous-mode du premier mode ;
[Fig. 7] la figure 7 est un organigramme représentant un troisième agencement fonctionnel du système, qui se trouve dans le premier sous-mode du premier mode ;
[Fig. 8] la figure 8 est un organigramme représentant un quatrième agencement fonctionnel du système, qui se trouve dans le premier mode (et qui est configuré selon la première configuration) ;
[Fig. 9] la figure 9 est un organigramme représentant un cinquième agencement fonctionnel du système, qui se trouve dans le premier mode (et qui est configuré selon la deuxième configuration) ;
[Fig. 10] la figure 10 représente un groupe audio comprenant deux boîtiers décodeurs.

### DESCRIPTION DETAILLEE DE L'INVENTION

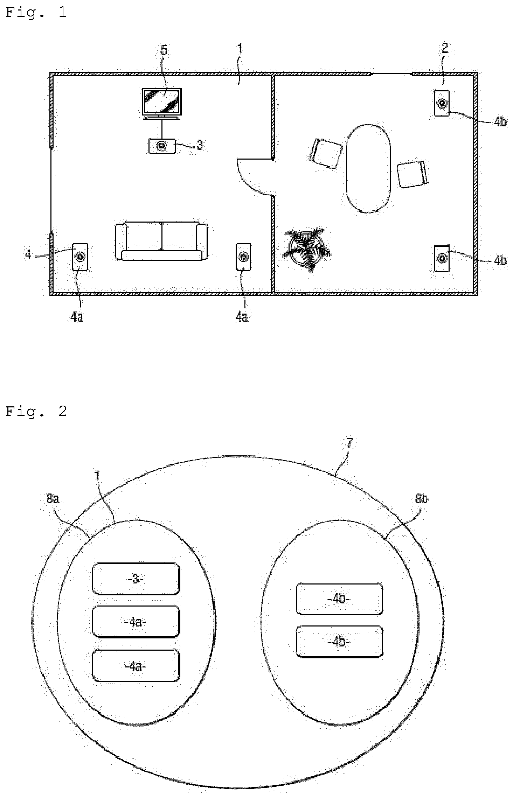

En référence à la figure 1, l'habitation d'un utilisateur comprend une première pièce 1 et une deuxième pièce 2.

Un décodeur audio/vidéo 3 et des équipements de diffusion audio, en l'occurrence deux enceintes connectées 4a, sont positionnés dans la première pièce 1.

Le décodeur audio/vidéo 3 peut comprendre lui-même des haut-parleurs intégrés : on parlera d'« enceinte interne » pour évoquer ce dispositif de diffusion audio intégré dans le décodeur audio/vidéo 3. Le décodeur audio/vidéo 3 est relié à la télévision 5 par un lien HDMI, et aux enceintes connectées 4a par une liaison quelconque, filaire ou sans fil.

Le décodeur audio/vidéo est ici un boîtier décodeur (*set-top box*, en anglais), mais pourrait être intégré à la télévision, ou bien être situé dans un appareil offrant d'autres fonctionnalités (par exemple une console de jeux).

Les enceintes connectées 4a sont principalement destinées ici à fournir des moyens d'extension sonore lors de la restitution vidéo par la télévision, par exemple en tant qu'enceintes restituant les voies arrière d'une configuration multi-canaux.

Deux autres équipements de diffusion audio, en l'occurrence deux enceintes connectées 4b, sont positionnés dans la deuxième pièce 2.

Le décodeur audio/vidéo 3 et les enceintes connectées 4 forment un système dans lequel est mise en œuvre la fonction *multiroom.*

Au lieu de se baser sur la négociation HDMI pour prioriser automatiquement le flux audio d'un flux audio-vidéo diffusé par le décodeur audio/vidéo 3 (comme pour les solutions de l'art antérieur), l'invention se base sur la coopération du décodeur audio/vidéo 3 avec les enceintes connectées 4 pour permettre au système d'alterner entre plusieurs modes possibles.

Le procédé de restitution sonore selon l'invention peut être mis en œuvre par un équipement maître présent dans le LAN (pour *Local Area Network*, que l'on peut traduire par « réseau local ») ou dans le WAN (pour *Wide Area Network*, que l'on peut traduire par « réseau étendu »). L'équipement maître est le décodeur audio/vidéo 3 ou l'une des enceintes connectées 4, voire même un ou des équipements distants (un ou des serveurs par exemple).

Le système peut aussi être piloté en mode « pair-à-pair », ce qui signifie alors que la mise en œuvre du procédé de restitution sonore selon l'invention est réalisée par tous les équipements du système.

Les messages nécessaires au fonctionnement du système peuvent être envoyés sur le LAN (en unicast ou en multicast), ou via le WAN (notamment si le système *multiroom* s'appuie sur un pilotage réalisé par un serveur/système distant).

Plusieurs protocoles sont possibles pour l'échange des messages. Une liste non limitative de ces protocoles est la suivante.

Pour le LAN unicast, les protocoles sont par exemple les suivants : messages SOAP (pour *Simple Object Access Protocol*) sur HTTP ou SMTP, messages CORBA (pour *Common Object Request Broker Architecture*), messages DCOM (pour *Distributed Component Object Model*), messages JSON-RPC (pour *JavaScript Object Notation* - *Remote Procedure Call*).

Pour le LAN multicast, les protocoles sont par exemple les suivants : messages UPnP (pour *Universal Plug and Play*), messages GENA (pour *General Event Notification Architecture*)*.*

Pour le WAN, les protocoles sont par exemple les suivants : messages JSON envoyés sur un *socket* TCP ou UDP, messages SOAP envoyés sur un *socket* UDP.

Dans le cas où le procédé de restitution sonore selon l'invention est mis en œuvre par un équipement maître, ses différentes étapes sont réalisées dans un module de traitement dudit équipement maître, qui comprend un composant de traitement adapté à exécuter des instructions d'un programme pour mettre en œuvre le procédé de restitution sonore. Le composant de traitement est par exemple un processeur, un DSP (pour *Digital Signal Processor*), un microcontrôleur, ou bien un circuit logique programmable tel qu'un FPGA (pour *Field Programmable Gate Arrays*) ou un ASIC (pour *Application Specific Integrated Circuit*). Si le procédé de restitution sonore est mis en œuvre par plusieurs équipements, ses différentes étapes sont réalisées par les différents modules de traitement desdits équipements.

Le décodeur audio/vidéo 3 se trouve en permanence dans un état de fonctionnement courant parmi une pluralité d'états de fonctionnement prédéfinis. Les états de fonctionnement prédéfinis comprennent un état éteint et un état allumé, qui comprend lui-même un premier état actif, un deuxième état actif, un premier état de veille et un deuxième état de veille.

Dans le premier état actif, le décodeur audio/vidéo 3 diffuse un flux audio-vidéo via la télévision 5 (pour le flux vidéo), via son enceinte interne (si présente) et via toutes ou certaines des enceintes connectées 4 (pour le flux audio). Dans le premier état actif, l'utilisateur peut aussi naviguer dans les écrans de l'interface graphique du décodeur audio/vidéo 3 (grille des programmes, messagerie, programmation d'enregistrements, navigateur internet, etc.). Le décodeur audio/vidéo 3 peut restituer des sons associés à la navigation dans l'interface graphique (par exemple les sons utilisés pour la fonction de retour auditif, ou *auditory feedback*). Les sons associés à la navigation dans l'interface graphique peuvent être superposés au flux audio diffusé par le décodeur audio/vidéo 3.

Dans le deuxième état actif, le décodeur audio/vidéo 3 ne diffuse pas de flux audio-vidéo mais peut être utilisé par un utilisateur pour naviguer dans l'interface graphique qui est alors visible sur la télévision 5. L'utilisateur peut naviguer dans les écrans de l'interface graphique sans qu'il n'y ait de diffusion de flux audio-vidéo (ou éventuellement, sur choix d'implémentation ou sur choix de paramètre par l'utilisateur, sans qu'il n'y ait de diffusion de contenu vidéo au premier plan). Dans ce cas, le décodeur audio/vidéo 3 ne restitue pas de flux audio associé à un flux vidéo, mais peut restituer les sons associés à la navigation dans l'interface graphique. Le décodeur audio/vidéo 3 peut aussi restituer un contenu audio via son enceinte interne (si présente).

Dans le premier état de veille, parfois appelé « veille légère », les sorties vidéo du décodeur audio/vidéo 3 sont coupées, les tuners éventuellement mis en veille, mais le module de traitement est toujours actif et les interfaces réseau opérationnelles. Les sorties audio sont potentiellement conservées actives pour les fonctions de lecture musicale. On considère donc que l'enceinte interne est « allumée » et peut restituer un contenu audio, par exemple un contenu musical.

Dans le deuxième état de veille, parfois appelé « veille profonde », les sorties audio-vidéo sont coupées, les tuners et le module de traitement sont stoppés ou placés dans des états spécifiques de veille profonde/suspension. Les capacités de traitement du décodeur audio/vidéo 3 ne sont plus accessibles. Les interfaces réseau sont coupées. Seuls subsistent des moyens permettant de sortir de cet état de veille profonde. On considère donc que l'enceinte interne est « éteinte » et ne peut pas restituer de contenu audio.

Le décodeur audio/vidéo 3 passe temporairement par une étape de veille légère avant de passer dans l'état de veille profonde.

On considère donc ici que l'enceinte interne peut se trouver soit dans un état allumé, dans lequel elle peut restituer un contenu audio, soit dans un état éteint.

Les enceintes connectées 4, quant à elles, peuvent se trouver soit dans un état allumé, soit dans un état de veille, soit dans un état éteint.

En référence à la figure 2, le décodeur audio/vidéo 3 (incluant l'enceinte interne) et les enceintes connectées 4 ont été, préalablement à la mise en œuvre du procédé de restitution sonore, regroupés dans un même groupe audio 7. Le groupe audio 7 peut avoir été défini soit par un utilisateur (par exemple via son *smartphone*), ou bien automatiquement, ou bien être un groupe par défaut.

Ce regroupement permet de commander une lecture synchronisée de contenus audio sur toutes les enceintes 4 du groupe 7. L'utilisateur peut ainsi écouter un contenu audio de manière continue même s'il se déplace entre les deux pièces, le contenu audio pouvant être issu d'un flux audio-vidéo diffusé par le décodeur audio/vidéo 3 (un film par exemple), ou bien être un contenu musical diffusé par exemple par un *smartphone* sur les enceintes connectées 4 (et aussi éventuellement sur l'enceinte interne du décodeur audio/vidéo 3).

D'autres groupes *multiroom* peuvent éventuellement être présents dans l'habitation de l'utilisateur.

Le procédé de restitution sonore consiste tout d'abord à regrouper dans un premier sous-groupe 8a le décodeur audio/vidéo 3 (et donc son enceinte interne) et les enceintes connectées 4a, et dans un deuxième sous-groupe 8b les enceintes connectées 4b.

C'est l'existence de ces deux sous-groupes 8, au sein d'un même groupe audio *multiroom* 7, qui permet de fournir une gestion optimale des cas de restitution sonore à l'utilisateur.

Le système dans son ensemble se trouve en permanence dans un mode courant parmi une pluralité de modes prédéfinis comprenant un premier mode, un deuxième mode et un troisième mode. Le procédé consiste donc à déterminer le mode courant dans lequel se trouve le système, et à faire restituer par le premier sous-groupe 8a et le deuxième sous-groupe 8b des signaux audio qui dépendent du mode courant.

Le système se trouve dans le premier mode lorsque les deux conditions suivantes sont réunies : le décodeur audio/vidéo 3 ne diffuse pas de flux audio-vidéo (et notamment pas de flux vidéo via la télévision 5), et l'une au moins des enceintes, parmi l'enceinte interne et les enceintes connectées 4, n'est pas éteinte.

Dans le premier mode, le premier sous-groupe 8a peut restituer un premier signal audio comprenant un contenu audio commun n'appartenant pas à un flux audio-vidéo, et le deuxième sous-groupe 8b peut restituer un deuxième signal audio comprenant le contenu audio commun.

Le contenu audio commun est par exemple un contenu musical. L'ensemble du système peut ainsi restituer un même contenu musical, dont la lecture peut être initiée par différents moyens : application *smartphone* ou tablette, logiciel sur ordinateur, site *web* permettant un pilotage via le *cloud*, boutons physiques sur les enceintes, télécommande ou contrôleur dédié, etc. À noter que, même si aucune lecture audio n'est en cours, on considère tout de même que le système est dans ce premier mode si les conditions sont réunies.

On note que le premier signal audio ne contient pas nécessairement uniquement le contenu audio commun.

En effet, lorsque le mode courant du système est le premier mode, le décodeur audio/vidéo 3 peut être utilisé pour naviguer dans son interface graphique, auquel cas, dans le premier sous-groupe 8a appartenant à la première pièce 1, les sons associés à la navigation dans l'interface graphique sont restitués en étant superposés au contenu audio commun (contenu musical par exemple). L'utilisateur continue donc de profiter du contenu musical, tout en bénéficiant des fonctionnalités de type *auditory feedback.* Il s'agit d'un avantage important pour l'utilisateur par rapport aux systèmes existants, qui coupent la lecture musicale dès l'allumage du lien HDMI.

La superposition des deux contenus audios se fait de manière préférable par le biais des capacités de mixage audio du décodeur audio/vidéo 3. Alternativement, et notamment dans le cas où le décodeur audio/vidéo 3 est dépourvu de telles capacités, on prévoit que l'enceinte interne du décodeur audio/vidéo 3 et/ou les enceintes externes 4a restituent le contenu musical, alors que les sons de l'interface graphique sont dirigés vers la sortie HDMI, dans le but d'être restitués par les enceintes internes de la télévision 5. Alternativement à nouveau, il est également possible d'ignorer totalement les sons de l'interface graphique (soit par impossibilité de restitution, soit par préférence utilisateur). Alternativement encore, le décodeur audio/vidéo 3 peut envoyer les sons de l'interface graphiques aux enceintes connectées 4a, et les enceintes connectées 4a utiliser leurs propres capacités de mixage (si elles en sont dotées) pour superposer le contenu musical et le son de l'interface graphique et produire ainsi le premier signal audio.

Le premier mode comprend trois sous-modes : un premier sous-mode, un deuxième sous-mode et un troisième sous-mode.

Lorsque le mode courant du système est le premier sous-mode, le décodeur audio/vidéo 3 se trouve dans le deuxième état actif : l'utilisateur peut naviguer dans l'interface graphique, le premier sous-groupe 8a peut restituer à la fois le contenu musical et les sons associés à la navigation dans l'interface graphique, et le deuxième sous-groupe 8b le contenu musical.

Dans le deuxième sous-mode, le décodeur audio/vidéo 3 se trouve dans le premier état de veille. Le premier sous-groupe 8a et le deuxième sous-groupe 8b peuvent restituer le contenu musical.

Dans le troisième sous-mode, le décodeur audio/vidéo 3 se trouve dans un état éteint ou dans le deuxième état de veille. Le premier sous-groupe 8a (à l'exception de l'enceinte interne) et le deuxième sous-groupe 8b peuvent restituer le contenu musical.

Lorsque le mode courant du système est le deuxième mode, le premier sous-groupe 8a peut restituer un troisième signal audio comprenant un flux audio appartenant à un flux audio-vidéo diffusé par le décodeur audio/vidéo 3, et le deuxième sous-groupe 8b peut restituer un quatrième signal audio, qui est possiblement différent du troisième signal audio.

Le système rentre dans le deuxième mode lorsque le décodeur audio/vidéo 3 démarre la diffusion d'un flux audio-vidéo (chaine TV en direct, VOD, lecture d'enregistrement PVR, etc.). Le décodeur audio/vidéo 3 se trouve alors dans le premier état actif.

On prévoit ici deux configurations possibles du système, lorsque celui-ci se trouve dans le deuxième mode. La première configuration et la deuxième configuration du système dans le deuxième mode sont exclusives : une unique configuration est utilisée.

Ces deux configurations correspondent à des comportements différents pour une même condition d'entrée (lecture d'un flux audio-vidéo). C'est soit le fournisseur d'équipements, soit l'utilisateur (par exemple par le biais d'un menu de réglage) qui choisit d'utiliser l'une ou l'autre des configurations.

Si les deux configurations sont rendues possibles par le fabricant, un paramètre utilisateur doit permettre à l'utilisateur de choisir la configuration à appliquer.

Lorsque le système est configuré selon la première configuration (et se trouve dans le deuxième mode), le quatrième signal audio ne comprend pas le flux audio du flux audio-vidéo diffusé par le décodeur audio/vidéo 3.

Ainsi, l'enceinte interne et les enceintes connectées 4a du premier sous-groupe 8a restituent le contenu audio destiné à la télévision 5, c'est-à-dire le flux audio du flux audio-vidéo, ainsi éventuellement que les sons associés à la navigation dans l'interface graphique. Les enceintes connectées 4b du deuxième sous-groupe 8b sont adaptées quant à elles à restituer un contenu musical et non le flux audio. Les utilisateurs situés dans la deuxième pièce 2 peuvent donc continuer à profiter du contenu musical (si un contenu musical était restitué par le groupe audio 7 préalablement au démarrage de la lecture du flux audio-vidéo), ou bien démarrer l'écoute d'un contenu musical.

Lorsque le système est configuré selon la deuxième configuration (et se trouve dans le deuxième mode), le quatrième signal audio comprend le flux audio du flux audio-vidéo diffusé par le décodeur audio/vidéo 3.

L'enceinte interne du décodeur audio/vidéo 3 et les enceintes connectées 4a du premier sous-groupe 8a restituent le contenu audio destiné à la télévision 5, c'est-à-dire le flux audio du flux audio-vidéo, ainsi que les sons associés à la navigation dans l'interface graphique.

Les enceintes connectées 4b du deuxième sous-groupe 8b restituent elles aussi le flux audio du flux audio-vidéo, ce qui permet à un utilisateur qui se déplace de la première pièce 1 vers la deuxième pièce 2 de continuer à suivre la partie sonore du programme télévisuel. Les sons associés à la navigation dans l'interface graphique ne sont pas restitués dans le deuxième sous-groupe 8b, car ils ne sont en général utiles qu'en appui de la navigation dans l'interface graphique (et donc inutiles dans la deuxième pièce 2).

On note qu'il est possible de restituer un contenu audio télévision multi-canaux dans la deuxième pièce 2 (en adaptant le dématriçage audio au nombre d'enceintes), mais les configurations multi-canaux ont peu d'intérêt lorsque l'image n'est pas visible. En conséquence, il semble plus judicieux de restituer le contenu audio destiné à la télévision 5 de manière monophonique dans la deuxième pièce 2.

Le système peut enfin se trouver dans un troisième mode. Dans le troisième mode, l'enceinte interne du décodeur audio/vidéo 3 est éteinte, ainsi que toutes les enceintes connectées 4a du premier sous-groupe 8a et du deuxième sous-groupe 8b.

Dans le troisième mode, aucun contenu audio n'est restitué.

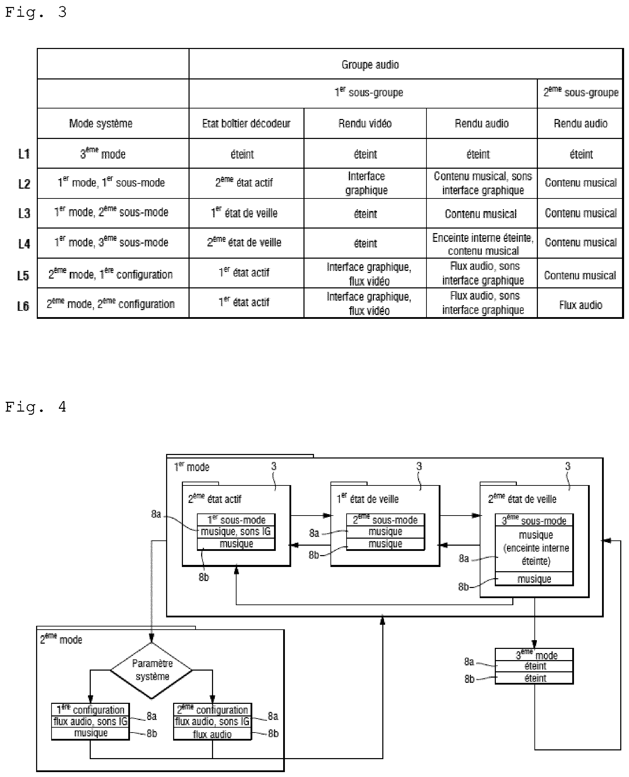

On résume ce qui vient d'être dit grâce au tableau de la figure 3.

On voit que, lorsque le système se trouve dans le troisième mode, le décodeur audio/vidéo 3 est dans l'état éteint (ou dans le deuxième état de veille), le rendu vidéo et le rendu audio du premier sous-groupe 8a sont éteints et le rendu audio du deuxième sous-groupe 8b est éteint (ligne L1) .

Lorsque le système se trouve dans le premier mode et que le décodeur audio/vidéo 3 est dans le deuxième état actif (premier sous-mode), le décodeur audio/vidéo 3 peut restituer les images de l'interface graphique, le premier sous-groupe 8a peut restituer le contenu audio commun (contenu musical) ainsi que les sons de l'interface graphique. Le deuxième sous-groupe 8b peut restituer le contenu audio commun (ligne L2).

Lorsque le système se trouve dans le premier mode et que le décodeur audio/vidéo 3 est dans le premier état de veille (deuxième sous-mode), le rendu vidéo est éteint, et le premier sous-groupe 8a restitue le contenu audio commun (contenu musical) via l'enceinte interne du décodeur audio/vidéo 3 et les enceintes connectées du premier sous-groupe 8a. Le deuxième sous-groupe 8b restitue le contenu audio commun (ligne L3).

Lorsque le système se trouve dans le premier mode et que le décodeur audio/vidéo 3 est dans le deuxième état de veille (troisième sous-mode), le rendu vidéo est éteint, et le premier sous-groupe 8a restitue le contenu audio commun (contenu musical) mais uniquement via les enceintes connectées 4a (car l'enceinte interne du décodeur audio/vidéo 3 est éteinte). Le deuxième sous-groupe 8b restitue le contenu audio commun (ligne L4).

Lorsque le système se trouve dans le deuxième mode, première configuration, le décodeur audio/vidéo 3 se trouve dans le premier état actif, la télévision restitue le flux vidéo associé à un flux audio-vidéo en lecture par le décodeur audio/vidéo 3, et éventuellement les images de l'interface graphique. Le premier sous-groupe 8a restitue le flux audio du flux audio-vidéo, ainsi éventuellement que les sons de l'interface graphique. Le deuxième sous-groupe 8b restitue un contenu audio différent, par exemple un contenu musical (ligne L5).

Lorsque le système se trouve dans le deuxième mode, deuxième configuration, le décodeur audio/vidéo 3 se trouve dans le premier état actif, la télévision 5 restitue le flux vidéo associé à un flux audio-vidéo en lecture par le décodeur audio/vidéo 3, et éventuellement les images de l'interface graphique. Le premier sous-groupe 8a restitue le flux audio du flux audio-vidéo ainsi éventuellement que les sons de l'interface graphique. Le deuxième sous-groupe 8b restitue lui aussi le flux audio du flux audio-vidéo, mais pas les sons de l'interface graphique (ligne L6).

On décrit maintenant, en référence à la figure 4, la manière dont sont déclenchées les transitions entre les différents modes du système.

Comme on l'a vu, la mise en œuvre du procédé de restitution sonore nécessite de déterminer dynamiquement, en fonction de paramètres prédéfinis comprenant l'état de fonctionnement courant du décodeur audio/vidéo 3 et des enceintes connectées 4, un mode courant dans lequel se trouve le système, parmi une pluralité de modes prédéfinis comprenant un premier mode (comprenant lui-même un premier sous-mode, un deuxième sous-mode et un troisième sous-mode), un deuxième mode et un troisième mode.

Les transitions entre les modes sont déclenchées par la survenue d'évènements relatifs aux états de fonctionnement du décodeur audio/vidéo 3 et des enceintes connectées 4 et, en particulier, aux changements de ces états de fonctionnement.

On se place par exemple dans un cas où le système se trouve dans le premier sous-mode du premier mode.

Le décodeur audio/vidéo 3 se trouve dans le deuxième état actif. Les enceintes connectées 4a et l'enceinte interne du premier sous-groupe 8a peuvent restituer un contenu audio commun, qui est un contenu musical, ainsi que les sons associés à la navigation dans l'application graphique (sons IG). Les enceintes connectées 4b du deuxième sous-groupe 8b peuvent restituer le contenu musical.

Lorsque le décodeur audio/vidéo 3 passe du deuxième état actif au premier état de veille, le système passe du premier sous-mode au deuxième sous-mode. Les enceintes connectées 4a et l'enceinte interne restituent uniquement le contenu musical. Les enceintes connectées 4b restituent aussi le contenu musical. Inversement, le système revient dans le premier sous-mode lorsque le décodeur audio/vidéo 3 passe du premier état de veille au deuxième état actif.

Lorsque le décodeur audio/vidéo 3 passe du premier état de veille à un état éteint ou au deuxième état de veille, le système passe dans le troisième sous-mode. L'enceinte interne se trouve dans l'état éteint. Les enceintes connectées 4 restituent uniquement le contenu musical. Inversement, le système revient dans le deuxième sous-mode lorsque le décodeur audio/vidéo 3 passe du deuxième état de veille au premier état de veille.

Lorsque le système se trouve dans le premier mode et que le décodeur audio/vidéo 3 démarre la diffusion d'un flux audio-vidéo, le système passe dans le deuxième mode et, plus précisément et en fonction de la manière dont est paramétré le système, soit dans la première configuration du deuxième mode soit dans la deuxième configuration du deuxième mode.

Dans la première configuration, la télévision 5 restitue le flux vidéo du flux audio-vidéo, l'enceinte interne et les enceintes connectées 4a restituent le flux audio et les sons associés à la navigation dans l'interface graphique, alors que les enceintes connectées 4b restituent un contenu musical.

Dans la deuxième configuration, la télévision 5 restitue le flux vidéo, l'enceinte interne et les enceintes connectées 4a restituent le flux audio et les sons associés à la navigation dans l'interface graphique, alors que les enceintes connectées 4b restituent le flux audio du flux audio-vidéo.

Lorsque le système est configuré selon le deuxième mode et que la diffusion du flux audio-vidéo s'arrête, le système repasse dans le premier mode.

Lorsque le système se trouve dans le troisième sous-mode du premier mode, le système passe dans le troisième mode lorsque toutes les enceintes connectées 4b du deuxième sous-groupe 8b passent dans l'état éteint.

Le système passe du troisième mode au premier mode lorsque le décodeur audio/vidéo 3 passe dans un état allumé (le sous-mode dépendra alors de l'état allumé) et/ou qu'au moins une enceinte connectée 4b du deuxième sous-groupe 8b passe dans un état allumé.

On décrit maintenant un certain nombre d'agencements fonctionnels qui permettent d'illustrer le fonctionnement de l'invention.

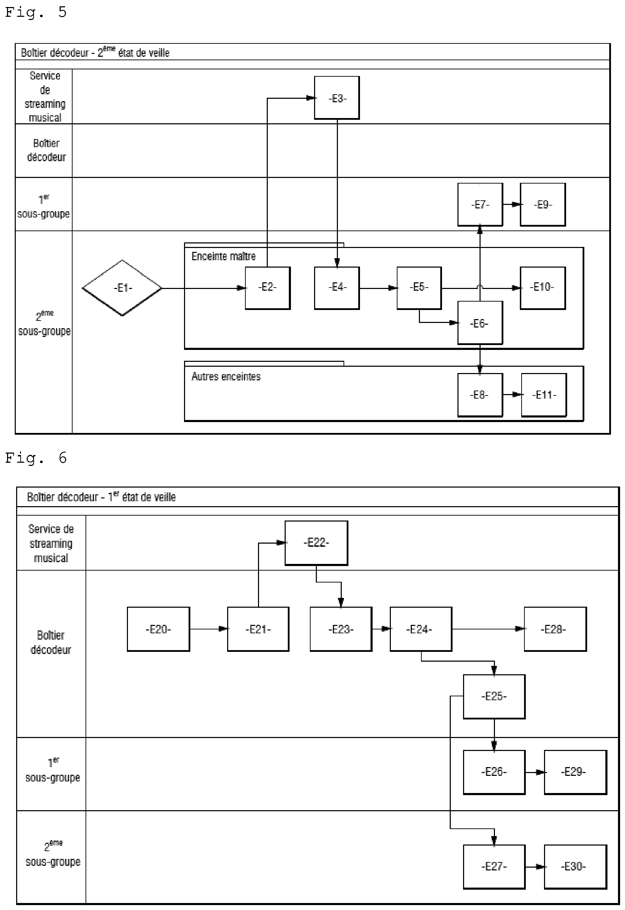

En référence à la figure 5, on se place dans le cas où le décodeur audio/vidéo 3 se trouve dans le deuxième état de veille. Le système se trouve dans le premier mode, troisième sous-mode.

Le système procède tout d'abord au choix d'une enceinte connectée 4b, appartenant au deuxième sous-groupe 8b, qui fait office de maître (étape E1). Le choix de l'enceinte connectée maître est par exemple réalisé en élisant celle dont le numéro de série est le plus élevé. Le maître va demander des données audio contenant un contenu musical à un service de *streaming* de musique (étape E2), et ce service va en retour envoyer les données audio (étape E3).

Le maître reçoit les données audio (étape E4), les décode, procède éventuellement au dématriçage des canaux, puis éventuellement au rematriçage des canaux (étape E5), avant d'envoyer les données audio pertinentes aux différentes enceintes connectées 4 (étape E6). Les enceintes connectées 4a du premier sous-groupe 8a reçoivent les données audio et les décodent (étape E7). De même, les enceintes connectées 4b du deuxième sous-groupe 8b reçoivent les données audio et les décodent (étape E8). Les enceintes connectées 4a du premier sous-groupe 8a (étape E9), l'enceinte maître (étape E10) et les autres enceintes connectées 4b du deuxième sous-groupe 8b (étape E11) procèdent alors à la lecture synchronisée du contenu musical.

En référence à la figure 6, on se place dans le cas où le décodeur audio/vidéo 3 se trouve dans le premier état de veille. Le système se trouve dans le premier mode, deuxième sous-mode.

Le système établit tout d'abord le décodeur audio/vidéo 3 comme maître (étape E20). Le décodeur audio/vidéo 3 va demander les données audio contenant un contenu musical à un service de *streaming* de musique (étape E21), et ce service va en retour envoyer les données audio (étape E22).

Le décodeur audio/vidéo 3 reçoit les données audio (étape E23), les décode, procède éventuellement au dématriçage des canaux, puis éventuellement au rematriçage des canaux (étape E24), avant d'envoyer les données audio pertinentes aux différentes enceintes connectées 4 (étape E25). Les enceintes connectées 4a du premier sous-groupe 8a reçoivent les données audio, et les décodent (étape E26). De même, les enceintes connectées 4b du deuxième sous-groupe 8b reçoivent les données audio, et les décodent (étape E27). L'enceinte interne du décodeur audio/vidéo (étape E28), les enceintes connectées 4a du premier sous-groupe 8a (étape E29) et les enceintes connectées 4b du deuxième sous-groupe 8b (étape E30) procèdent alors à la lecture synchronisée du contenu musical.

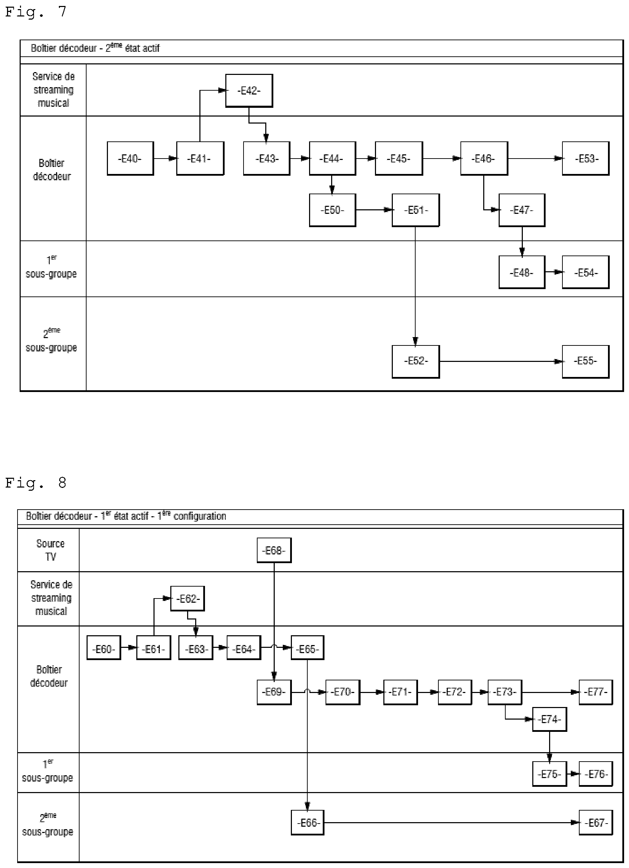

En référence à la figure 7, on se place dans le cas où le décodeur audio/vidéo 3 se trouve dans le deuxième état actif. Le système se trouve dans le premier mode, premier sous-mode.

Le système établit tout d'abord le décodeur audio/vidéo 3 comme maître (étape E40), et va demander les données audio contenant un contenu musical à un service de *streaming* de musique (étape E41). Ce service va en retour envoyer les données audio (étape E42).

Le décodeur audio/vidéo 3 reçoit les données audio (étape E43), les décode, procède éventuellement au dématriçage des canaux (étape E44). Deux chemins sont alors suivis par les données audio, en fonction de leur destination.

Dans le premier chemin, les données audio sont mixées avec les sons associés à la navigation dans l'interface graphique (étape E45), puis éventuellement rematricées (étape E46). Les données nécessaires aux enceintes connectées 4a du premier sous-groupe 8a sont alors envoyées à ces enceintes connectées 4a (étape E47), qui les reçoivent (étape E48).

Dans le second chemin, les données audio sont éventuellement rematricées (étape E50), puis envoyées aux enceintes connectées 4b du deuxième sous-groupe 8b (étape E51), qui les reçoivent (étape E52).

Enfin, le contenu audio est restitué de manière synchronisée par l'enceinte interne (étape E53), les enceintes connectées 4a du premier sous-groupe 8a (étape E54) et les enceintes connectées 4b du deuxième sous-groupe 8b (étape E55). L'enceinte interne et les enceintes connectées 4a du premier sous-groupe 8a restituent aussi les sons de l'interface graphique.

En référence à la figure 8, le décodeur audio/vidéo 3 se trouve dans le premier état actif, et le système se trouve donc dans le deuxième mode (première configuration). L'utilisateur visionne un contenu vidéo restitué par la télévision 5 et provenant d'un flux audio-vidéo diffusé par le décodeur audio/vidéo 3.

Le système établit tout d'abord le décodeur audio/vidéo 3 comme maitre (étape E60). Le décodeur audio/vidéo 3 va demander les données audio contenant un contenu musical au service de *streaming* de musique (étape E61), et ce service va en retour envoyer les données audio (étape E62).

Le décodeur audio/vidéo 3 reçoit les données audio (étape E63), les décode, procède éventuellement au dématriçage puis au rematriçage des canaux (étape E64), afin d'adapter le signal à la configuration des enceintes connectées. Les données audio contenant le contenu musical sont alors envoyées aux enceintes connectées 4b du deuxième sous-groupe 8b (étape E65), qui les réceptionnent (étape E66), avant de procéder à la diffusion synchronisée du contenu musical (étape E67).

En parallèle, une source TV envoie le flux audio-vidéo au décodeur audio/vidéo 3 (étape E68) qui le reçoit (étape E69). La source TV peut être de différentes natures : câble, satellite, DSL, *streaming* VOD ou IP, enregistrement local, etc.

Les données du flux audio-vidéo sont démultiplexées par le décodeur audio/vidéo 3 qui en extrait le flux audio (étape E70), qui est décodé et dématricé (étape E71), avant d'être mixé avec les éventuels sons de l'interface graphique (étape E72). Le flux audio est alors rematricé (étape E73), puis les canaux pertinents sont envoyés aux enceintes connectées 4a du premier sous-groupe 8a (étape E74). Ces enceintes connectées 4a, ainsi que l'enceinte interne du décodeur audio/vidéo 3, reçoivent les données (étape E75) et restituent le flux audio de manière synchronisée (étape E76).

En parallèle, le flux vidéo est également diffusé par le décodeur audio/vidéo 3 et restitué de manière synchronisée avec la diffusion sonore (étape E77) (la restitution du flux vidé n'est pas représentée, afin de simplifier l'organigramme).

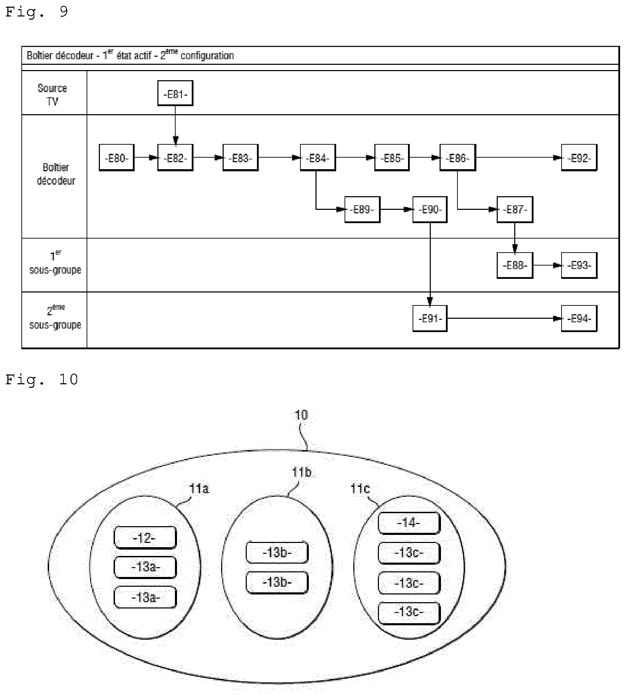

En référence à la figure 9, le décodeur audio/vidéo 3 se trouve dans le premier état actif, et le système se trouve dans le deuxième mode (deuxième configuration). L'utilisateur visionne un contenu vidéo restitué par la télévision 5 et provenant d'un flux audio-vidéo diffusé par le décodeur audio/vidéo 3.

Le système établit tout d'abord le décodeur audio/vidéo 3 comme maître (étape E80). Une source TV envoie le flux audio-vidéo au décodeur audio/vidéo 3 (E81) qui le reçoit (E82) .

Les données du flux audio-vidéo sont démultiplexées par le décodeur audio/vidéo 3 qui en extrait le flux audio (étape E83), qui est décodé et dématricé (étape E84), avant d'être mixé avec les éventuels sons de l'interface graphique (étape E85). Le flux audio est alors rematricé (étape E86), puis les canaux pertinents sont envoyés aux enceintes connectées 4a du premier sous-groupe 8a (étape E87). Les enceintes connectées 8a reçoivent les données (étape E88).

Les données audio du flux audio, à destination des enceintes connectées 4b du deuxième sous-groupe 8b, sont directement rematricées (étape E89), sans mixage avec les sons de l'interface graphique, puis envoyées à ces enceintes connectées 4b (étape E90), qui reçoivent ces données audio (étape E91).

L'enceinte interne du décodeur audio/vidéo (étape E92), les enceintes connectées 4a du premier sous-groupe 8a (étape E93) et les enceintes connectées 4b du deuxième sous-groupe 8b (étape E94) restituent les données audio de manière synchronisée.

Pour tous ces organigrammes, d'autres agencements des fonctions sont bien sûr possibles, aboutissant au même résultat pour l'utilisateur. Par exemple, le mixage audio peut être réalisé indifféremment par le décodeur audio/vidéo 3 (ou bien par les enceintes connectées 4a du premier sous-groupe 8a), sans différence perceptible par l'utilisateur. De même, les données audio provenant du service de *streaming* musical peuvent éventuellement être obtenues par une enceinte connectée 4 et non par le décodeur audio/vidéo 3.

On s'intéresse maintenant plus particulièrement aux états de veille des équipements dont il est ici question.

Il est fréquent qu'une enceinte connectée possède un mode de veille automatique, qui éteint les étages d'amplification et ralentit éventuellement le composant de traitement, par exemple un DSP et/ou un processeur interne, de ladite enceinte connectée.

Le décodeur audio/vidéo 3, comme on l'a vu plus tôt, est doté d'un premier état de veille et d'un deuxième état de veille.

Plusieurs approches sont donc possibles pour traiter du cas de la veille d'un décodeur audio/vidéo 3 faisant partie d'un groupe *multiroom.*

On peut prévoir d'empêcher le décodeur audio/vidéo 3 de passer dans le deuxième état de veille lorsque le système se trouve dans le premier mode et que le contenu audio commun (contenu musical) est en train d'être restitué.

Il est aussi possible d'empêcher le passage dans le deuxième état de veille du décodeur audio/vidéo 3 dès lors que celui-ci appartient à un groupe *multiroom.* Ceci peut être une option, accessible par exemple dans les réglages utilisateurs.

Une fonction de WoL (*Wake on Lan*) / WoW (*Wake on Wan*) peut permettre de repasser du deuxième état de veille au premier état de veille sur sollicitation réseau, afin que le décodeur audio/vidéo 3 redevienne disponible pour la lecture audio. La sollicitation WoL/WoW serait envoyée par un autre élément du réseau local (enceinte connectée, contrôleur, *smartphone*, etc.), lors du démarrage de la lecture audio (ou un peu avant, par exemple lors de la création d'une *playlist* ou de la navigation dans le catalogue musical).

On s'intéresse maintenant au cas où plusieurs boîtiers décodeurs font partie du même groupe *multiroom.* Il convient alors de créer un sous-groupe par décodeur audio/vidéo.

Ainsi, en référence à la figure 10, dans le groupe 10, le premier sous-groupe 11a, situé dans une première pièce, comprend le décodeur audio/vidéo 12, son enceinte interne (éventuellement), ainsi que les enceintes connectées 13a. Le deuxième sous-groupe 11b, situé dans une deuxième pièce, comprend les enceintes connectées 13b. Le troisième sous-groupe 11c, situé dans une troisième pièce, comprend le décodeur audio/vidéo 14, son enceinte interne (éventuellement), ainsi que les enceintes connectées 13c.

Lorsqu'un décodeur audio/vidéo est dans le premier état de veille (légère), son sous-groupe est considéré comme faisant partie du sous-groupe d'une autre pièce, et la gestion est alors similaire à celle de la configuration avec un seul décodeur audio/vidéo.

Cependant, lorsque le système est configuré dans la deuxième configuration (pour le deuxième mode), des ajustements sont nécessaires car tout le groupe 10 ne peut pas diffuser à la fois le flux audio du flux audio-vidéo diffusé par le décodeur audio/vidéo 12 et le flux audio du flux audio-vidéo diffusé par le décodeur audio/vidéo 14 (qui sont a priori différents, car un utilisateur, qui regarde la télévision dans la première pièce, regarde a priori un programme différent de celui regardé par un utilisateur dans la troisième pièce).

Plusieurs approches sont possibles.

Une première approche consiste à ne pas autoriser la configuration du système selon le deuxième mode - deuxième configuration dans le cas où plusieurs boîtiers décodeurs font partie d'un même groupe audio *multiroom.*

Une deuxième approche consiste à ne pas permettre d'avoir plusieurs boîtiers décodeurs dans un même groupe audio *multiroom.*

Une troisième approche consiste à gérer le problème en définissant des priorités.

Selon une première option de priorité, le premier décodeur audio/vidéo qui diffuse un flux audio-vidéo déclenche la diffusion du flux audio sur les enceintes connectées des autres pièces, et cette lecture ne peut être interrompue par un autre décodeur audio/vidéo tant qu'elle est toujours en cours. La gestion du/des sous-groupes incluant un décodeur audio/vidéo n'est pas affectée.

Selon une deuxième option de priorité, le décodeur audio/vidéo qui démarre la lecture du flux audio-vidéo devient prioritaire pour la diffusion du flux audio sur les enceintes des autres pièces, même si une précédente lecture d'un flux audio était précédemment en cours (initiée par l'autre décodeur audio/vidéo). La gestion du/des sous-groupes incluant un décodeur audio/vidéo n'est pas affectée.

Bien entendu, l'invention n'est pas limitée au mode de réalisation décrit mais englobe toute variante entrant dans le champ de l'invention telle que définie par les revendications.

Le premier sous-groupe comprend le décodeur audio/vidéo et au moins un premier équipement de diffusion audio.

Si une enceinte interne est intégrée dans le décodeur audio/vidéo, le premier sous-groupe peut comprendre l'enceinte interne et un ou plusieurs autres premiers équipements de diffusion audio, comme c'est le cas ici avec les enceintes connectées 4a. L'enceinte interne pourrait aussi parfaitement être le seul premier équipement de diffusion audio du premier sous-groupe (qui comprend alors uniquement le décodeur audio/vidéo intégrant l'enceinte interne).

Par contre, dans le cas où le décodeur audio/vidéo ne comprend pas d'enceinte interne, le premier sous-groupe comprend au moins un premier équipement de diffusion audio qui est un équipement distinct du décodeur audio/vidéo.

## Revendications

1. Procédé de restitution sonore, mis en œuvre dans un système comprenant un décodeur audio/vidéo (3) relié à une télévision (5) et une pluralité d'équipements de diffusion audio (4) préalablement regroupés dans un même groupe audio (7), comprenant les étapes de :
- définir un premier sous-groupe (8a) comprenant le décodeur audio/vidéo (3) et au moins un premier équipement de diffusion audio (4a), et un deuxième sous-groupe (8b) comprenant au moins un deuxième équipement de diffusion audio (4b) ;
- déterminer dynamiquement, en fonction d'au moins un paramètre prédéfini comprenant un état de fonctionnement courant du décodeur audio/vidéo (3), un mode courant dans lequel se trouve le système, parmi une pluralité de modes prédéfinis comprenant un premier mode et un deuxième mode ;
- lorsque le système se trouve dans le premier mode, dans lequel le décodeur audio/vidéo (3) ne diffuse pas de flux audio-vidéo, faire restituer par le premier sous-groupe (8a) un premier signal audio comprenant un contenu audio commun, et par le deuxième sous-groupe (8b) un deuxième signal audio comprenant le contenu audio commun ;
- lorsque le système se trouve dans le deuxième mode, dans lequel le décodeur audio/vidéo (3) diffuse un flux audio-vidéo, faire restituer par le premier sous-groupe (8a) un troisième signal audio comprenant un flux audio appartenant au flux audio-vidéo, et par le deuxième sous-groupe un quatrième signal audio.

2. Procédé de restitution sonore selon la revendication 1, dans lequel le quatrième signal audio ne comprend pas le flux audio appartenant au flux audio-vidéo.

3. Procédé de restitution sonore selon la revendication 1, dans lequel le quatrième signal audio comprend le flux audio appartenant au flux audio-vidéo.

4. Procédé de restitution sonore selon l'une des revendications précédentes, comprenant l'étape de déterminer que le système passe du premier mode au deuxième mode lorsque le décodeur audio/vidéo (3) passe d'un état de fonctionnement dans lequel il ne diffuse pas de flux audio-vidéo, à un état de fonctionnement dans lequel il diffuse un flux audio-vidéo.

5. Procédé de restitution sonore selon l'une des revendications précédentes, dans lequel, lorsque le système se trouve dans le premier mode (respectivement le deuxième mode) et qu'un utilisateur navigue dans une interface graphique du décodeur audio/vidéo (3) visible sur la télévision (5), le premier signal audio (respectivement le troisième signal audio) comprend des sons associés à la navigation dans ladite interface graphique, et le deuxième signal audio (respectivement le quatrième signal audio) ne comprend pas les sons associés à la navigation dans ladite interface graphique.

6. Procédé de restitution sonore selon l'une des revendications précédentes, dans lequel la pluralité de modes prédéfinis comprend aussi un premier sous-mode et un deuxième sous-mode appartenant au premier mode, le système passant du premier sous-mode au deuxième sous-mode lorsque le décodeur audio/vidéo (3) passe d'un état actif dans lequel le décodeur audio/vidéo peut diffuser un contenu vidéo à un premier état de veille dans lequel le décodeur audio/vidéo ne peut pas diffuser de contenu vidéo, et du deuxième sous-mode au premier sous-mode lorsque le décodeur audio/vidéo passe du premier état de veille à l'état actif.

7. Procédé de restitution sonore selon la revendication 6, dans lequel le décodeur audio/vidéo (3) comporte une enceinte interne qui se trouve dans un état allumé lorsque le décodeur audio/vidéo se trouve dans le premier état de veille, et dans lequel la pluralité de modes prédéfinis comprend aussi un troisième sous-mode appartenant au premier mode, le système passant du deuxième sous-mode au troisième sous-mode lorsque le décodeur audio/vidéo (3) passe du premier état de veille à un état éteint ou à un deuxième état de veille dans lequel l'enceinte interne se trouve dans un état éteint, et du troisième sous-mode au deuxième sous-mode lorsque le décodeur audio/vidéo (3) passe de l'état éteint ou du deuxième état de veille au premier état de veille.

8. Procédé de restitution sonore selon la revendication 7, comprenant l'étape d'empêcher le décodeur audio/vidéo (3) de passer dans le deuxième état de veille lorsque le système se trouve dans le premier mode et que le contenu audio commun est en train d'être restitué.

9. Procédé de restitution sonore selon la revendication 7, dans lequel la pluralité de modes prédéfinis comprend aussi un troisième mode, le système passant du troisième sous-mode au troisième mode lorsque tous les deuxièmes équipements de diffusion audio (4b) passent dans un état éteint, et du troisième mode au premier mode lorsque le décodeur audio/vidéo (3) passe dans un état allumé et/ou qu'au moins l'un des deuxièmes équipements de diffusion audio (4b) passe dans un état allumé.

10. Procédé de restitution sonore selon l'une des revendications précédentes, comprenant l'étape d'interdire que le groupe audio (7) contienne plus d'un décodeur audio/vidéo (3).

11. Système comprenant un décodeur audio/vidéo (3) et une pluralité d'équipements de diffusion audio (4) regroupés dans un même groupe audio (7), dans lequel est mis en œuvre le procédé de restitution sonore selon l'une des revendications précédentes.

12. Programme d'ordinateur comprenant des instructions qui conduisent le système selon la revendication 11 à exécuter les étapes du procédé de restitution sonore selon l'une des revendications 1 à 10.

13. Support d'enregistrement lisible par ordinateur, sur lequel est enregistré le programme d'ordinateur selon la revendication 12.

14. Equipement maître, appartenant à un système comprenant un décodeur audio/vidéo (3) et une pluralité d'équipements de diffusion audio (4) regroupés dans un même groupe audio (7), l'équipement maître étant agencé pour mettre en œuvre le procédé de restitution sonore selon l'une des revendications 1 à 10.

15. Equipement maître selon la revendication 14, l'équipement maître étant un décodeur audio/vidéo (3).

16. Equipement maître selon la revendication 14, l'équipement maître étant une enceinte connectée (4).

17. Programme d'ordinateur comprenant des instructions qui conduisent l'équipement maître selon la revendication 14 à exécuter les étapes du procédé de restitution sonore selon l'une des revendications 1 à 10.

18. Support d'enregistrement lisible par ordinateur, sur lequel est enregistré le programme d'ordinateur selon la revendication 17.
